# FASCICULE DE BREVET EUROPEEN

(11) **EP 3 676 225 B1**
(45) Date de publication et mention de la délivrance du brevet: **27.10.2021**
(21) Numéro de dépôt: 18739557.9
(22) Date de dépôt: 18.07.2018
(51) Int. Cl.: C01D 7/10, C12F 3/02

(54) **PROCEDE DE VALORISATION DES EFFLUENTS GAZEUX ISSUS DE FERMENTATION ALCOOLIQUE**
VERFAHREN ZUR NUTZUNG VON ABGASEN AUS ALKOHOLISCHER FERMENTATION
UPCYCLING PROCESS OF THE WASTED GASES PRODUCED BY ALCOHOLIC FERMENTATION

(30) Priorité: 29.08.2017 FR 1757956
(43) Date de publication de la demande: 08.07.2020
(73) Titulaire: Sede Environnement, 62000 Arras (FR)
(72) Inventeur: RICARD, Jean-Philippe, 33000 Bordeaux (FR)
(74) Mandataire: Vidon Brevets & Stratégie
(86) Numéro de dépôt international: PCT/EP2018/069485
(87) Numéro de publication internationale: WO 2019/042654

(56) Documents cités:
- WO-A2-2010/056460
- US-A1- 2006 193 765

## Description

### 1. Domaine technique

Le domaine de l'invention est celui de la valorisation des sous-produits issus de la fermentation alcoolique ou alimentaire, notamment les effluents gazeux comprenant du dioxyde de carbone.

Plus précisément, l'invention concerne un procédé pour la valorisation du dioxyde de carbone issu de la fermentation alcoolique et une installation mobile correspondante.

### 2. Etat de l'art

La fermentation alcoolique est un processus biochimique par lequel des sucres sont notamment transformés en éthanol et en dioxyde de carbone dans un milieu liquide essentiellement privé d'air. Elle est communément utilisée dans la fabrication de produits alimentaires, notamment pour la fabrication de produits alcooliques, tels le vin, la bière ou le saké ou pour la fabrication de produits de boulangerie, tel le pain.

Les procédés de fabrication de produits alimentaires utilisant la fermentation alcoolique produisent également des résidus ou des sous-produits. Ces sous-produits, s'ils sont valorisés de manière appropriée, peuvent assurer une source de revenus complémentaires. Par exemple, dans le domaine de la vinification du vin, une valorisation économiquement viable des marcs de raisin et/ou des lies de vin peut être obtenue par une distillation pour en récupérer l'éthanol, une utilisation en méthanisation ou bien une utilisation en compostage.

Parmi les résidus produits, il y a notamment les effluents gazeux. Ceux-ci peuvent comprendre différents gaz, suivant les matières premières ayant fait l'objet d'une fermentation alimentaire. Parmi ceux-ci, il y a notamment le dioxyde de carbone, dont la valorisation est recherchée, mais malaisée, notamment sur les lieux mêmes de mise en oeuvre de la fermentation alcoolique.

De nombreux procédés de captage du dioxyde de carbone ont été mis au point à une échelle industrielle pour les industries fortement émettrices en dioxyde de carbone, par exemple pour les industries dans le domaine de l'incinération des déchets ou de la production de ciment. Cependant, les industries de fabrication de produits alimentaires utilisant la fermentation alcoolique produisent une quantité beaucoup plus faible de dioxyde de carbone rendant une valorisation du dioxyde de carbone émis difficilement viable économiquement. De plus, des installations à échelle industrielle sont inadaptées pour le traitement d'une faible quantité de dioxyde de carbone. WO2010/056460 décrit un procédé de valorisation des effluents gazeux pouvant être issus d'une fermentation alcoolique avec extraction d'effluents gazeux et une production d'une suspension de bicarbonate alcalin dans une unité de production de bicarbonate dans un unique compartiment après compression des effluents gazeux.

US2006/193765 décrit une méthode de production de bicarbonate par circulation de CO2 sous pression dans une solution de carbonate afin d'obtenir du bicarbonate précipité.

Il existe donc un besoin de solutions techniques permettant la valorisation des effluents gazeux, notamment du dioxyde de carbone, in-situ, c'est-à-dire sur les lieux mêmes de sa production. Il existe aussi le besoin de solutions techniques économiquement viables, pour valoriser les effluents gazeux obtenus à partir de la fermentation alcoolique.

### 3. Objectifs

L'invention a pour objectif de proposer un procédé de valorisation in-situ des effluents gazeux issu de fermentation alcoolique.

L'invention a également pour objectif de proposer un procédé de valorisation des effluents gazeux issu de fermentation alcoolique qui soit viable économiquement.

En particulier, un objectif de l'invention est de proposer un procédé de production de bicarbonate comprenant une étape de fermentation alcoolique, qui soit efficace énergétiquement et qui permette un bon taux de conversion du dioxyde de carbone émis en bicarbonate.

Un autre objectif de l'invention est de proposer un procédé de production de bicarbonate comprenant une étape de fermentation alcoolique, qui soit robuste et facilement adaptable à des variations de débit de dioxyde de carbone.

L'invention a également pour objectif de proposer une installation mobile permettant la valorisation in-situ des effluents gazeux issus de fermentation alcoolique.

En particulier, l'invention a pour objectif de proposer une installation mobile particulièrement compacte.

### 4. Exposé de l'invention

La présente invention concerne un procédé de valorisation des effluents gazeux issus de fermentation alcoolique. Ce procédé comprend les étapes suivantes:
- une fermentation alcoolique dans un bioréacteur produisant une matière fermentée et un effluent gazeux, ledit effluent gazeux comprenant du dioxyde de carbone ;
- une extraction de l'effluent gazeux dudit bioréacteur suivi de sa compression, afin d'obtenir un effluent gazeux comprimé;
- une production d'une suspension de bicarbonate alcalin dans une unité de production de bicarbonate, ladite unité de production de bicarbonate étant divisée en au moins deux compartiments disposés successivement en série, ladite étape de production d'une suspension de bicarbonate alcalin comprenant :
   - une introduction en partie basse du premier compartiment de l'effluent gazeux comprimé,
   - une introduction dans le dernier compartiment d'une solution mère comprenant une solution aqueuse comprenant un carbonate alcalin dissout,
   - une circulation à contre-courant entre un flux gazeux s'appauvrissant en dioxyde de carbone et une solution aqueuse s'appauvrissant en ions carbonates dans les au moins deux compartiments disposés successivement en série, et,
   - une précipitation de bicarbonate alcalin dans le premier compartiment par réaction de dioxyde de carbone dissout avec des ions carbonates, afin d'obtenir une suspension de bicarbonate alcalin insoluble ;
   et,
- une récupération de la suspension de bicarbonate alcalin insoluble du premier compartiment, suivie d'une étape de filtration ou de décantation de la suspension de bicarbonate alcalin insoluble afin d'obtenir un résidu humide de bicarbonate alcalin et une phase aqueuse.

Ainsi, les inventeurs de la présente invention ont réussi à proposer un procédé de valorisation in-situ des effluents gazeux issus de la fermentation alcoolique par une combinaison spécifique d'opérations unitaires pour produire un résidu humide de bicarbonate alcalin. Ce procédé est économiquement viable pour convertir des débits relativement faibles de dioxyde de carbone et est également adaptable à des variations de débit de dioxyde de carbone. Il peut être mis en œuvre de manière simple, dans une installation mobile de taille particulièrement compacte.

En outre, des conditions contrôlées, détaillées ci-dessous dans des modes préférés, permettent d'obtenir un taux de conversion optimal du dioxyde de carbone en bicarbonate ainsi qu'un bon rendement et une pureté suffisante en bicarbonate alcalin. On entend par « conditions contrôlées » des conditions spécifiques, notamment de pression et de température pour les gaz et de concentration et de température pour les liquides.

L'étape de fermentation alcoolique permet de produire un effluent gazeux. En effet, la fermentation alcoolique est un processus biochimique par lequel des sucres sont transformés notamment en éthanol et dioxyde de carbone dans un milieu liquide essentiellement privé d'air. Elle est mise en œuvre dans un bioréacteur par des microorganismes capables de fermentation alcoolique dans un substrat contenant ces sucres. L'étape de fermentation alcoolique est généralement réalisée à une température comprise entre 10°C et 45°C. Elle est notamment réalisée à une température comprise entre 12°C et 20°C pour la vinification de vins blancs. Elle est notamment réalisée à une température comprise entre 25°C et 40°C pour la vinification de vins rouges.

L'effluent gazeux issu de la fermentation alcoolique comprend du dioxyde de carbone. L'effluent gazeux peut également contenir des arômes volatiles ou des impuretés issues de la fermentation alcoolique. L'effluent gazeux a avantageusement un débit compris entre 30 et 100 m³/h. Selon la nature de la fermentation alcoolique utilisée, la fraction volumique de dioxyde de carbone dans l'effluent gazeux est comprise entre 35% et 99%.

L'étape d'extraction de l'effluent gazeux du bioréacteur suivi de l'étape de compression de l'effluent gazeux permet d'obtenir un effluent gazeux comprimé. Préférentiellement, l'effluent gazeux est comprimé à une pression comprise entre 1,3 barA et 3 barA (bar Absolu). La pression peut être adaptée en fonction des variations du débit de l'effluent gazeux et/ou de la fraction volumique en dioxyde de carbone de l'effluent gazeux. Plus la pression de compression est élevée, plus le dioxyde de carbone présent dans l'effluent gazeux comprimé a une pression partielle élevée, ce qui est nécessaire à un bon transfert de masse du dioxyde de carbone gazeux en dioxyde de carbone dissout en solution aqueuse.

Un compresseur à effet venturi ou un compresseur à anneau liquide sont avantageusement utilisés pour mettre en œuvre l'étape d'extraction de l'effluent gazeux du bioréacteur suivi de l'étape de compression de l'effluent gazeux. Ces compresseurs ont pour intérêt d'être peu chers, peu encombrants et ne nécessitant que peu d'entretien. De plus, ils sont facilement et rapidement adaptables en fonction des variations du débit de l'effluent gazeux permettant ainsi de ne pas perturber la fermentation alcoolique dans le bioréacteur.

Dans un mode de réalisation particulier dudit procédé, la fraction volumique de dioxyde de carbone dans ledit effluent gazeux est comprise entre 35% et 99% et la pression dudit effluent gazeux comprimé est comprise entre 1,3 barA et 3 barA (bar Absolus).

De manière facultative, l'effluent gazeux extrait du bioréacteur peut être refroidi avant d'être comprimé, ce qui entraine une condensation d'une partie de l'eau et des arômes volatiles ou des impuretés et permet d'augmenter la fraction volumique du dioxyde de carbone dans l'effluent gazeux. Dans le cas d'un compresseur à anneau liquide, le refroidissement de l'effluent gazeux permet en outre de maintenir une bonne capacité de compression de l'anneau liquide. L'effluent gazeux est avantageusement refroidi à une température comprise entre 5 et 15°C.

La solution mère comprenant des ions carbonates (CO₃²⁻) a préférentiellement une concentration en ions carbonates comprise entre 2.5 mol/L et 6 mol/L (soit une solution d'ions carbonates de 15 à 36% en poids), à une température comprise entre 20°C et 40°C. Elle est préparée à une température comprise entre 20°C et 40°C dans une cuve de stockage. Avantageusement, la solution mère est une solution saturée en ions carbonates. Ceci a pour intérêt de procurer une bonne cinétique de réaction entre les ions carbonates de la solution mère et le dioxyde de carbone dissout en solution pour former des ions bicarbonates.

La solution mère est préférentiellement une solution de carbonate alcalin. Elle peut notamment être une solution de carbonate de sodium ou de carbonate de potassium.

La solution mère a de manière préférentielle un pH compris entre 7 et 10 et de manière très préférentielle un pH compris entre 8 et 9. La solution mère peut notamment avoir un pH de 8,5. En effet, ces gammes de pH centrées sur 8,5, correspondent au domaine de prédominance des ions bicarbonates (HCO₃⁻) par rapport aux ions carbonates (CO₃²⁻) et à l'acide carbonique (H₂CO₃).

La solution mère peut également présenter d'autres espèces dissoutes en solution. Elle peut notamment contenir au moins un autre sel alcalin. En particulier, la solution mère peut contenir un sel alcalin d'hydroxyde et/ou un sel alcalin de chlorure, le contre-ion alcalin étant préférentiellement de la même sorte que celui du carbonate alcalin.

L'étape de production de la suspension de bicarbonate alcalin insoluble est mise en œuvre dans une unité de production de bicarbonate. L'unité de production de bicarbonate est divisée en au moins deux compartiments disposés successivement en série.

Les au moins deux compartiments peuvent être disposés successivement l'un au dessus de l'autre verticalement, ce qui permet d'obtenir une unité de production de bicarbonate avec une très faible emprise au sol mais une hauteur au sol élevée, ou être disposés successivement l'un à côté de l'autre, ce qui permet d'obtenir une unité de production de bicarbonate ayant une hauteur au sol raisonnable et une empreinte au sol raisonnable, ou bien être disposés selon une combinaison de ces deux modes. Selon un mode de réalisation particulier de l'invention, les compartiments de l'unité de production de bicarbonate sont des colonnes à bulle ayant une base mesurant approximativement de 0,3 à 0,7m² et de hauteur 2 à 2,5m. Ils sont notamment destinés à être disposés dans un container, par exemple un container maritime, pour être transportés facilement d'un lieu de production, où est effectuée une fermentation alcoolique, à un autre.

L'effluent gazeux comprimé est introduit en partie basse du premier compartiment. Il est avantageusement introduit dans le premier compartiment par des plateaux à fines bulles permettant d'assurer une grande surface d'échange gaz/liquide et de privilégier ainsi le transfert de masse du dioxyde de carbone gazeux en dioxyde de carbone dissout en solution aqueuse. Le flux gazeux comprenant du dioxyde de carbone traverse l'ensemble du premier compartiment jusqu'à une partie haute du premier compartiment puis est envoyée en partie basse du deuxième compartiment et ainsi de suite jusqu'au dernier compartiment. Le gaz en excès, appauvri en dioxyde de carbone, ayant atteint la partie haute du dernier compartiment, peut être récupéré en partie haute du dernier compartiment.

La solution mère est introduite dans le dernier compartiment. Elle est préférentiellement introduite en partie haute du dernier compartiment puis récupérée en partie basse du dernier compartiment. La solution aqueuse comprenant des ions carbonates est ensuite envoyée dans l'avant-dernier compartiment, de préférence en partie haute, puis récupérée, de préférence en partie basse, et ainsi de suite jusqu'au premier compartiment.

La réaction bilan entre du dioxyde de carbone dissout et des ions carbonates, produisant des ions bicarbonate est :

COz(aq) +H₂O + CO₃²⁻ (aq)⇔ 2 HCO₃⁻(aq) ;

Une fois la saturation (voire sursaturation) de la solution aqueuse en ions bicarbonates atteinte, les ions bicarbonates précipitent pour former une suspension de bicarbonate alcalin insoluble.

A l'intérieur de l'unité de production de bicarbonate, il y a donc une circulation à contre-courant entre un flux gazeux s'appauvrissant en dioxyde de carbone et une solution aqueuse s'appauvrissant en ions carbonates dans les compartiments disposés successivement en série. La réaction dans le premier compartiment du dioxyde de carbone dissout avec les ions carbonates permet principalement la précipitation des ions bicarbonates pour former une suspension de bicarbonate alcalin insoluble. La réaction du dioxyde de carbone avec les ions carbonates dans le(s) compartiment(s) suivant(s) permet principalement la saturation (voire la sursaturation) de la solution aqueuse en ions bicarbonates et l'épuisement en dioxyde de carbone du flux gazeux. Une précipitation de bicarbonate alcalin insoluble peut, dans certains modes de mise en œuvre, également être observée dans le(s) compartiment(s) suivant(s).

La circulation à contre-courant dans les compartiments disposés successivement en série est avantageusement mise en œuvre dans chacun des compartiments de l'unité de production de bicarbonate par :
i) le remplissage du compartiment avec une solution aqueuse riche en ions carbonates jusqu'à un niveau haut du compartiment,
ii) l'introduction d'un flux gazeux riche en dioxyde de carbone en partie basse du compartiment,
iii) la récupération d'un flux gazeux appauvri en dioxyde de carbone en partie haute du compartiment et,
iv) la vidange d'une solution aqueuse appauvrie en ions carbonates jusqu'à un niveau bas du compartiment.

Avantageusement, le remplissage du compartiment avec une solution aqueuse riche en ions carbonates et la vidange d'une solution aqueuse appauvrie en ions carbonates ont lieu de manière séquentielle. Avantageusement, l'introduction d'un flux gazeux riche en dioxyde de carbone et la récupération d'un flux gazeux appauvri en dioxyde de carbone ont lieu de manière continue.

Pour un compartiment donné, la solution aqueuse riche en ions carbonates est la solution mère si le compartiment est le dernier des compartiments ou sinon correspond à la solution appauvrie en ions carbonates du compartiment directement supérieur. Pour un compartiment donné, la solution aqueuse appauvrie en ions carbonates est la suspension de bicarbonate alcalin insoluble récupérée si le compartiment est le premier compartiment, ou sinon correspond à la solution aqueuse riche en ions carbonates du compartiment directement inférieur.

Pour un compartiment donné, le flux gazeux riche en dioxyde de carbone est l'effluent gazeux comprimé si le compartiment est le premier compartiment ou sinon correspond au flux gazeux appauvri en dioxyde de carbone du compartiment directement inférieur. Pour un compartiment donné, le flux gazeux appauvri en dioxyde de carbone est le gaz en excès récupéré si le compartiment est le dernier compartiment ou sinon correspond au flux gazeux riche en dioxyde de carbone du compartiment directement supérieur.

Les expressions « directement supérieur » et « directement inférieur » sont à comprendre en considérant que les compartiments sont disposés en série les uns à la suite des autres, le compartiment le plus inférieur étant le premier compartiment, le compartiment le plus supérieur étant le dernier compartiment.

La circulation à contre-courant est particulièrement adaptée du fait de la relativement faible quantité de dioxyde de carbone produite par la fermentation alcoolique.

La température à l'intérieur desdits au moins deux compartiments est préférentiellement maintenue à une valeur comprise entre 20° C et 45°C.

Selon un mode de réalisation particulier de l'invention l'unité de production de bicarbonate est divisée en deux compartiments disposés en série. Dans ce mode de réalisation, la température du deuxième compartiment est maintenue à une température comprise entre 20°C et 40°C. Ceci a pour intérêt que la température de fonctionnement dans le premier compartiment atteigne une valeur comprise entre 20 et 45 °C, préférentiellement une valeur proche de 40°C, du fait de la nature exothermique de la réaction de formation des ions bicarbonates et de leur cristallisation. En effet, c'est dans cette gamme de températures que la différence des points de saturation des ions carbonates et des ions bicarbonates est maximale. Ainsi, dans le premier compartiment la précipitation du bicarbonate alcalin est favorisée par rapport à la précipitation du carbonate alcalin.

L'étape de récupération de la suspension de bicarbonate alcalin insoluble du premier compartiment, suivie de l'étape de filtration ou de décantation de la suspension de bicarbonate alcalin insoluble permet d'obtenir un résidu humide de bicarbonate alcalin et une phase aqueuse.

L'étape de récupération de la suspension de bicarbonate alcalin insoluble du premier compartiment peut notamment être initiée quand le pH dans le premier compartiment passe en dessous d'une valeur seuil de pH comprise entre 8 et 9, par exemple 8.5. Le premier compartiment peut alors être vidé jusqu'à atteindre un niveau bas de liquide, par exemple 20 cm de liquide.

Dans le cas d'une filtration de la suspension de bicarbonate insoluble, cette dernière est préférentiellement mise en œuvre à l'aide d'un filtre rotatif sous pression réduite grâce à une pompe à anneau liquide. L'eau de l'anneau liquide peut avantageusement être recyclée pour la préparation de la solution mère via un bac tampon.

Le résidu humide de bicarbonate alcalin comprend généralement entre 20% et 50% d'eau en poids.

La phase aqueuse obtenue à l'issue de l'étape de filtration ou de décantation est une solution aqueuse appauvrie en ions carbonates. Elle a une concentration en ions carbonates généralement comprise entre 0,4 et 2 mol/L. De manière avantageuse la solution aqueuse peut être recyclée pour la préparation de la solution mère, notamment via un bac tampon.

Facultativement, le procédé peut comprendre une étape de séchage du résidu humide de bicarbonate alcalin, permettant d'obtenir un résidu sec de bicarbonate alcalin.

L'étape facultative de séchage du résidu humide de bicarbonate alcalin est préférentiellement mise en œuvre dans un sécheur rotatif alimenté en continu ou en discontinu. Les sources de chaleur utilisées dans le sécheur rotatif sont adaptées en fonction des disponibilités et peuvent être des fumées, une boucle de fluide thermique, etc.

Le résidu sec de bicarbonate alcalin comprend entre 0,5 et 5% en poids d'eau.

Ainsi, dans un mode de réalisation particulier du procédé, il comprend une étape de séchage dudit résidu humide de bicarbonate alcalin, afin d'obtenir un résidu sec de bicarbonate alcalin, ledit résidu sec de bicarbonate alcalin comprenant entre 0.5 et 5% en poids d'eau.

La présente invention concerne également une installation mobile pour la valorisation des effluents gazeux issus de fermentation alcoolique en bicarbonate alcalin. L'installation mobile comprend :
- une unité de production de bicarbonate, comprenant au moins deux compartiments disposés successivement en série : l'unité de production de bicarbonate comprend un point d'injection pour gaz comprimé en partie basse du premier compartiment, un point d'évacuation d'une suspension aqueuse dans ledit premier compartiment, un point d'injection pour solution aqueuse dans le dernier compartiment, des moyens de circulation à contre-courant pour gaz et pour liquide entre chaque compartiment ;
- un moyen d'injection d'un effluent gazeux comprimé, relié au point d'injection pour gaz du premier compartiment et adapté pour être relié de manière amovible à un point d'extraction des effluents gazeux d'un bioréacteur pour fermentation alcoolique : le moyen d'injection d'un effluent gazeux comprimé comprend un compresseur ;
- une cuve de stockage pour une solution aqueuse de carbonate alcalin ;
- un moyen d'injection de solution aqueuse relié à ladite cuve de stockage et audit point d'injection pour solution aqueuse dans le dernier compartiment ; et
- un moyen d'évacuation et de filtration relié au point d'évacuation d'une suspension aqueuse du premier compartiment.

### 5. Figures

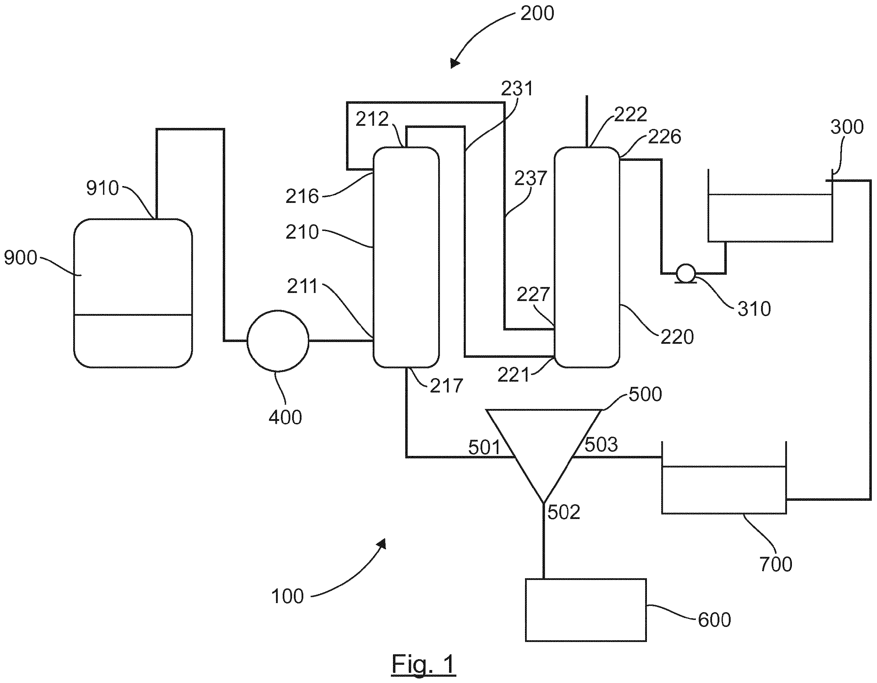

D'autres caractéristiques et avantages de l'invention apparaîtront à la lecture de la description suivante d'un exemple d'installation selon la présente invention permettant de mettre en œuvre le procédé selon la présente invention. Cette description est accompagnée d'un dessin annexé : la Figure 1 représente un diagramme schématique d'une installation selon la présente invention reliée à un bioréacteur pour fermentation alcoolique.

### 6. Exemple d'une installation mobile et d'un procédé selon l'invention

### 6.1 Installation mobile

Ainsi que cela est représenté à la figure 1, l'installation (100) peut être reliée de manière amovible à un bioréacteur (900). Une telle installation est possiblement mobile et peut être déplacée sur différents sites géographiques, notamment dans le cas où le bioréacteur (900) ne fonctionne pas en continu tout au long de l'année.

L'installation (100) comprend notamment : une unité de production de bicarbonate (200), une cuve de stockage (300), un compresseur (400), une unité de filtration (500), une unité de séchage (600) et une cuve tampon (700).

L'unité de production de bicarbonate (200) est composée de deux colonnes (210 ; 220) disposées en série l'une à côté de l'autre. Les deux colonnes (210; 220) ont chacune une largeur d'environ 600 mm, une longueur d'environ 900 mm et une hauteur d'environ 2200mm. Chacune des colonnes peut être équipée de capteurs (non représentés), notamment des capteurs de pression, de température, de pH, ou des capteurs de niveau.

Chacune des colonnes (210; 220) comprend en partie basse des points d'injection pour gaz (211 ; 221) et un point d'évacuation pour liquide (217 ; 227) et en partie haute un point d'évacuation pour gaz (212 ; 222) et un point d'introduction pour liquide (216 ; 226). Une canalisation pour gaz (231) connectant le point d'évacuation pour gaz (212) de la première colonne (210) et les points d'injection pour gaz (221) de la deuxième colonne (220) et une canalisation pour liquide (237) connectant le point d'introduction pour liquide (216) de la première colonne (210) et le point d'évacuation pour liquide (227) de la deuxième colonne (220) forment des moyens de circulation à contre courant pour gaz et pour liquide entre la première (210) et la deuxième (220) colonne.

Le bioréacteur (900) est un bioréacteur adapté pour la fermentation alcoolique de microorganismes. Un point d'extraction d'un effluent gazeux (910) permet l'évacuation de l'effluent gazeux comprenant du dioxyde de carbone produit par la fermentation alcoolique.

Un moyen d'injection d'un effluent gazeux comprimé relie le point d'injection pour gaz (211) de la première colonne (210) et peut être adapté au point d'extraction d'un effluent gazeux (910) du bioréacteur (900). Il comprend notamment un compresseur (400) et des canalisations pour gaz. Le compresseur (400) peut notamment être un compresseur à anneau liquide ou un compresseur à effet venturi.

La cuve de stockage (300) est adaptée pour préparer une solution aqueuse de carbonate alcalin ;

Un moyen d'injection de solution aqueuse relie la cuve de stockage (300) au point d'introduction pour liquide (226) de la deuxième colonne (220). Il comprend notamment une pompe (310) et des canalisations pour liquide.

L'unité de filtrage (500) est adaptée pour filtrer une suspension de bicarbonate alcalin. Elle peut notamment être composée d'un filtre rotatif placé sous pression réduite grâce à une pompe à anneau liquide. Elle comporte une entrée pour une suspension à filtrer (501) et deux sorties, la première sortie (502) permettant de récupérer un résidu solide humide et la deuxième sortie (503) permettant de récupérer un filtrat.

L'entrée pour une suspension à filtrer (501) est connectée par une canalisation au point d'évacuation pour liquide (217) de la première colonne, la première sortie (502) est connectée à l'unité de séchage (600) et la deuxième sortie (503) à la cuve tampon (700).

L'unité de séchage (600) peut être un sécheur rotatif alimenté en continu ou en discontinu. La source de chaleur utilisée dans le sécheur est adaptée en fonction des disponibilités dans l'environnement proche et peut être notamment des fumées, une boucle de fluide thermique, etc.

La cuve tampon (700) est connectée à la cuve de stockage (300) par une canalisation, ce qui permet d'alimenter en partie la cuve de stockage (300) en solution aqueuse de carbonate alcalin.

Les canalisations utilisées dans l'installation (100) comportent en outre des moyens de contrôle, pouvant être en particulier des vannes 2 ou 3 voies avec pour objectif de maintenir en mouvement les solutions et suspension pour éviter les problématiques de cristallisation.

### 6.2 Procédé

Le procédé suivant a été mis en œuvre dans l'installation ci-dessus décrite.

Une fermentation alcoolique dans le bioréacteur (900) a permis d'extraire un effluent gazeux ayant une fraction volumique en dioxyde de carbone de 80% à un débit de 50 Nm³/h (Normo mètre cube par heure). L'effluent gazeux a été refroidi à une température de 10°C et comprimé grâce au compresseur (400) à anneau liquide.

La solution mère de carbonate de sodium a été préparée à une température de 40°C dans la cuve de stockage (300).

Une suspension de bicarbonate de sodium insoluble a été obtenue par:
- une introduction au niveau du point d'injection pour gaz (211) de la première colonne (210) de l'effluent gazeux comprimé,
- une introduction au niveau du point d'injection pour liquide (226) de la deuxième colonne (220) de la solution mère de carbonate de sodium,
- une circulation à contre-courant dans les première (210) et deuxième (220) colonnes entre un flux gazeux s'appauvrissant en dioxyde de carbone et une solution aqueuse s'appauvrissant en ions carbonates,
- une précipitation de bicarbonate de sodium insoluble dans la première colonne à une température de 35°C,
- une récupération de la suspension de bicarbonate de sodium insoluble de la première colonne au niveau du point d'évacuation pour liquide (217), suivie d'une étape de filtration grâce à l'unité de filtrage (500).

Le résidu humide obtenu est séché grâce à l'unité de séchage (600). Le filtrat est recirculé dans la cuve de stockage (300) via la cuve tampon (700).

Plus précisément la circulation à contre-courant dans les première (210) deuxième (220) colonnes a été mise en œuvre par :
- le remplissage initiale des première (210) et deuxième (220) colonnes avec la solution mère de carbonate de sodium,
- l'introduction en continu de l'effluent gazeux comprimé en partie basse de la première colonne (210) jusqu'à atteindre un pH de 8.5, la récupération en continu d'un flux gazeux appauvri en dioxyde de carbone en partie haute de la première colonne (210), l'introduction en continu en partie basse de la deuxième colonne (220), et la récupération en continu d'un flux gazeux encore plus appauvri en dioxyde de carbone en partie haute de la deuxième colonne (220),
- la vidange de la première colonne (210) jusqu'à atteindre un niveau de 20 cm de liquide (pendant la vidange, il n'y a pas d'arrêt d'injection d'effluent gazeux et une mise en fonctionnement d'une pompe « en canard » permet d'éviter la formation de dépôt de bicarbonate de sodium),
- une fois la vidange de la première colonne (210) terminée, le remplissage de la première colonne (210) par vidange de la solution aqueuse appauvrie en ions carbonates de la deuxième colonne (220),
- le remplissage de la deuxième colonne (220) avec la solution mère de carbonate de sodium, etc.

Ainsi, le remplissage et la vidange des première (210) et deuxième (220) colonnes en solution aqueuse de carbonate de sodium ont lieu de manière séquentielle. A contrario, l'introduction et la récupération dans les première (210) et deuxième (220) colonnes de flux gazeux ont lieu de manière continue. Le temps de séjour du dioxyde de carbone dans chacune des première (210) et deuxième (220) colonnes est compris entre 5 secondes et 1 minute.

Ce procédé a permis d'obtenir une consommation de 90% du dioxyde de carbone issu de la fermentation alcoolique et une pureté comprise entre 90% et 97% pour le bicarbonate de sodium obtenu.

## Revendications

1. Procédé de valorisation des effluents gazeux issu de fermentation alcoolique comprenant les étapes suivantes:
- une fermentation alcoolique dans un bioréacteur produisant une matière fermentée et un effluent gazeux, ledit effluent gazeux comprenant du dioxyde de carbone ;
- une extraction de l'effluent gazeux dudit bioréacteur suivi de sa compression, afin d'obtenir un effluent gazeux comprimé;
- une production d'une suspension de bicarbonate alcalin dans une unité de production de bicarbonate, ladite unité de production de bicarbonate étant divisée en au moins deux compartiments disposés successivement en série, ladite étape de production d'une suspension de bicarbonate alcalin comprenant :
- une introduction en partie basse du premier compartiment dudit effluent gazeux comprimé,
- une introduction dans le dernier compartiment d'une solution mère comprenant une solution aqueuse comprenant un carbonate alcalin dissout,
- une circulation à contre-courant entre un flux gazeux s'appauvrissant en dioxyde de carbone et une solution aqueuse s'appauvrissant en ions carbonates dans lesdits au moins deux compartiments disposés successivement en série, et,
- une précipitation de bicarbonate alcalin dans ledit premier compartiment par réaction de dioxyde de carbone dissout avec des ions carbonates, afin d'obtenir une suspension de bicarbonate alcalin insoluble ;
et,
- une récupération de ladite suspension de bicarbonate alcalin insoluble dudit premier compartiment, suivie d'une étape de filtration ou de décantation de ladite suspension de bicarbonate alcalin insoluble afin d'obtenir un résidu humide de bicarbonate alcalin et une phase aqueuse.

2. Procédé selon la revendication 1, **caractérisé en ce que** la fraction volumique de dioxyde de carbone dans ledit effluent gazeux est comprise entre 35% et 99% et **en ce que** la pression dudit effluent gazeux comprimé est comprise entre 1,3 barA et 3 barA (bar Absolus).

3. Procédé selon l'une quelconque des revendications précédentes, **caractérisée en ce que** ladite solution mère comprend du carbonate de sodium et/ou de potassium.

4. Procédé selon l'une quelconque des revendications précédentes, **caractérisé en ce que** ladite solution mère a une concentration en ions carbonates comprise entre 2,5 mol/L et 6 mol/L à une température comprise entre 20°C et 40°C.

5. Procédé selon l'une quelconque des revendications précédentes, **caractérisé en ce que** ladite solution mère a un pH compris entre 7 et 10.

6. Procédé selon l'une quelconque des revendications précédentes, **caractérisé en ce que** ladite circulation à contre-courant dans lesdits au moins deux compartiments disposés successivement en série, est mise en œuvre dans chaque compartiment par :
- un remplissage du compartiment avec une solution aqueuse riche en ions carbonates jusqu'à un niveau haut du compartiment,
- une introduction d'un flux gazeux riche en dioxyde de carbone en partie basse du compartiment,
- une récupération d'un flux gazeux appauvri en dioxyde de carbone en partie haute du compartiment et,
- une vidange d'une solution aqueuse appauvrie en ions carbonates jusqu'à un niveau bas du compartiment.

7. Procédé selon l'une quelconque des revendications précédentes, caractérisé en ce la température à l'intérieur desdits au moins deux compartiments est maintenue à une valeur comprise entre 20° C et 45°C.

8. Procédé selon l'une quelconque des revendications précédentes, **caractérisé en ce qu'**il comprend une étape de séchage dudit résidu humide de bicarbonate alcalin, afin d'obtenir un résidu sec de bicarbonate alcalin, ledit résidu sec de bicarbonate alcalin comprenant entre 0.5 et 5% en poids d'eau.

9. Procédé selon l'une quelconque des revendications précédentes, **caractérisé en ce que** ladite phase aqueuse obtenue à l'issue de ladite étape de filtration ou de décantation est recyclée pour la préparation de ladite solution mère.

10. Installation mobile pour la valorisation des effluents gazeux issus de fermentation alcoolique comprenant :
- une unité de production de bicarbonate, ladite unité étant divisée en au moins deux compartiments disposés successivement en série, et ladite unité comprenant un point d'injection pour gaz comprimé en partie basse du premier compartiment, un point d'évacuation d'une suspension aqueuse dans ledit premier compartiment, un point d'injection pour solution aqueuse dans le dernier compartiment, des moyens de circulation à contre-courant pour gaz et pour liquide entre chaque compartiment successif ;
- un moyen d'injection d'un effluent gazeux comprimé relié audit point d'injection pour gaz dudit premier compartiment et adapté pour être relié de manière amovible à un point d'extraction des effluents gazeux d'un bioréacteur pour fermentation alcoolique, ledit moyen d'injection d'un effluent gazeux comprimé comprenant un compresseur ;
- une cuve de stockage pour une solution aqueuse de carbonate alcalin ;
- un moyen d'injection de solution aqueuse relié à ladite cuve de stockage et audit point d'injection pour solution aqueuse dans le dernier compartiment ; et,
- un moyen d'évacuation et de filtration relié audit point d'évacuation d'une suspension aqueuse dudit premier compartiment.

## Patentansprüche

1. Verfahren zur Verwertung von Abgasen aus der Alkoholfermentation, umfassend die folgenden Schritte:
- Alkoholfermentation in einem Bioreaktor unter Produktion eines fermentierten Materials und eines Abgases, wobei das Abgas Kohlendioxid enthält;
- Extraktion des Abgases aus dem Bioreaktor, gefolgt von Kompression desselben, um ein komprimiertes Abgas zu erhalten;
- Herstellung einer Alkalibicarbonatsuspension in einer Bicarbonatproduktionseinheit, wobei die Bicarbonatproduktionseinheit in mindestens zwei Kompartimente unterteilt ist, die in Reihe hintereinander angeordnet sind, wobei der Schritt der Herstellung einer Alkalibicarbonatsuspension Folgendes umfasst:
- Einbringen des komprimierten Abgases in den unteren Teil des ersten Kompartiments;
- Einbringen einer Mutterlauge, die eine ein gelöstes Alkalicarbonat enthaltende wässrige Lösung umfasst, in das zweite Kompartiment;
- Gegenstromzirkulation zwischen einem Gasstrom, der an Kohlendioxid verarmt, und einer wässrigen Lösung, die an Carbonationen verarmt, in den mindestens zwei in Reihe hintereinander angeordneten Kompartimenten; und
- Ausfällung von Alkalibicarbonat in dem ersten Kompartiment durch Reaktion von gelöstem Kohlendioxid mit den Carbonationen, um eine Suspension von unlöslichem Alkalibicarbonat zu erhalten;
und
- Gewinnung der Suspension von unlöslichem Alkalibicarbonat aus den ersten Kompartiment, gefolgt von einem Schritt der Filtration oder Dekantierung der Suspension von unlöslichem Alkalibicarbonat, um einen feuchten Alkalibicarbonat-Rückstand und eine wässrigen Phase zu erhalten.

2. Verfahren nach Anspruch 1, **dadurch gekennzeichnet, dass** der Volumenanteil an Kohlendioxid in dem Abgas zwischen 35 % und 99 % beträgt und dass der Druck des komprimierten Abgases zwischen 1,3 barA und 3 barA (bar absolut) beträgt.

3. Verfahren nach einem der vorhergehenden Ansprüche, **dadurch gekennzeichnet, dass** die Mutterlauge Natrium- und/oder Kaliumcarbonat umfasst.

4. Verfahren nach einem der vorhergehenden Ansprüche, **dadurch gekennzeichnet, dass** die Mutterlauge eine Konzentration an Carbonationen zwischen 2,5 mol/l und 6 mol/l bei einer Temperatur zwischen 20 °C und 40 °C aufweist.

5. Verfahren nach einem der vorhergehenden Ansprüche, **dadurch gekennzeichnet, dass** die Mutterlauge einen pH-Wert zwischen 7 und 10 besitzt.

6. Verfahren nach einem der vorhergehenden Ansprüche, **dadurch gekennzeichnet, dass** die Gegenstromzirkulation in den mindestens zwei in Reihe hintereinander angeordneten Kompartimenten in jedem Kompartiment folgendermaßen durchgeführt wird:
- Füllen des Kompartiments mit einer wässrigen Lösung, die reich an Carbonationen ist, bis zu einem oberen Niveau des Kompartiments,
- Einleiten eines Gasstroms, der reich an Kohlendioxid ist, in den unteren Teil des Kompartiments,
- Gewinnen eines an Kohlendioxid verarmten Gasstroms im oberen Teil des Kompartiments und
- Ablassen einer an Carbonationen verarmten wässrigen Lösung bis zu einem unteren Niveau des Kompartiments.

7. Verfahren nach einem der vorhergehenden Ansprüche, **dadurch gekennzeichnet, dass** die Temperatur im Inneren der mindestens zwei Kompartimente bei einem Wert zwischen 20 °C und 45 °C gehalten wird.

8. Verfahren nach einem der vorhergehenden Ansprüche, **dadurch gekennzeichnet, dass** es einen Schritt des Trocknens des feuchten Alkalibicarbonat-Rückstands umfasst, um einen trockenen Alkalibicarbonat-Rückstand zu erhalten, wobei der trockene Alkalibicarbonat-Rückstand zwischen 0,5 und 5 Gew.-% Wasser umfasst.

9. Verfahren nach einem der vorhergehenden Ansprüche, **dadurch gekennzeichnet, dass** die am Ende des Filtrations- oder Dekantierungsschritts erhaltene wässrige Phase zur Herstellung der Mutterlauge rückgeführt wird.

10. Mobile Anlage zur Verwertung von Abgasen aus der Alkoholfermentation, umfassend:
- eine Bicarbonatproduktionseinheit, wobei die Einheit in mindestens zwei in Reihe hintereinander angeordnete Kompartimente unterteilt ist und die Einheit eine Injektionsstelle für komprimiertes Gas im unteren Teil der ersten Kompartiments, eine Ablassstelle für eine wässrige Suspension im ersten Kompartiment, eine Injektionsstelle für wässrige Lösung im zweiten Kompartiment und Mittel zur Gegenstromzirkulation für Gas und Flüssigkeit zwischen jedem aufeinanderfolgenden Kompartiment umfasst;
- ein Mittel zum Injizieren eines komprimierten Abgases, das mit der Injektionsstelle für Gase des ersten Kompartiments verbunden und dafür ausgelegt ist, lösbar mit einer Extraktionsstelle für Abgase eines Bioreaktors zur Alkoholfermentation verbunden zu werden, wobei das Mittel zum Injizieren eines komprimierten Abgases einen Kompressor umfasst;
- einen Lagerungstank für eine wässrige Alkalicarbonatlösung;
- ein Mittel zum Injizieren von wässriger Lösung, das mit dem Lagerungstank und der Injektionsstelle für wässrige Lösung im zweiten Kompartiment verbunden ist; und
- ein Mittel zum Ablassen und zur Filtration, das mit der Stelle zum Ablassen einer wässrigen Suspension aus dem ersten Kompartiment verbunden ist.

## Claims

1. Method for the valorization of gaseous effluents derived from alcohol fermentation comprising the following steps:
- alcohol fermentation in a bioreactor producing a fermented matter and a gaseous effluent, said gaseous effluent including carbon dioxide;
- extraction of the gaseous effluent from said bioreactor followed by its compression, in order to obtain a compressed gaseous effluent;
- production of a suspension of alkaline bicarbonate in a bicarbonate production unit, said bicarbonate production unit being divided into at least two compartments disposed successively in series, said step of production of a suspension of alkaline bicarbonate comprising:
- an introduction, at the lower part of the first compartment, of said compressed gaseous effluent,
- an introduction into the last compartment of a stock solution comprising an aqueous solution including a dissolved alkaline carbonate,
- a circulation in a counter-flow between a gas stream being depleted in carbon dioxide and an aqueous solution being depleted in carbonate ions in said at least two compartments disposed successively in series, and,
- a precipitation of alkaline bicarbonate in said first compartment by reaction of dissolved carbon dioxide with carbonate ions in order to obtain a suspension of insoluble alkaline bicarbonate;
and,
- a recovery of said insoluble alkaline bicarbonate suspension from said first compartment followed by a step of filtration or decantation of said suspension of insoluble alkaline bicarbonate, in order to obtain a wet residue of alkaline bicarbonate and an aqueous phase.

2. Method according to claim 1, **characterized in that** the volume fraction of carbon dioxide in said gaseous effluent ranges from 35% to 99% and **in that** the pressure of said compressed gaseous effluent ranges from 1.3 bar(A) to 3 bar(A) (bars Absolute).

3. Method according to any one of the above claims, **characterized in that** said stock solution comprises sodium carbonate and/or potassium carbonate.

4. Method according to any one of the above claims, **characterized in that** said stock solution has a concentration in carbonate ions ranging from 2.5 mol/L to 6 mol/L at a temperature ranging from 20°C to 40°C.

5. Method according to any one of the above claims, **characterized in that** said stock solution has a pH value of 7 to 10.

6. Method according to any one of the above claims, **characterized in that** said counter-flow circulation in said at least two compartments disposed successively in series is implemented in each compartment by:
- a filling of the compartment with a carbonate-ion-rich aqueous solution a high level of the compartment is reached,
- an introduction of a carbon-dioxide-rich gas stream in the lower part of the compartment,
- a recovery of a gas stream getting depleted in carbon dioxide gas stream in the upper part of the compartment, and
- a draining away of aqueous solution getting depleted in carbonate ions up to a low level of the compartment.

7. Method according to any one of the above claims, **characterized in that** the temperature within said at least two compartments is maintained at a value of 20° C to 45°C.

8. Method according to any one of the above claims, **characterized in that** it comprises a step for drying said wet residue of alkaline bicarbonate, in order to obtain a dry residue of alkaline bicarbonate, said dry residue of alkaline bicarbonate comprising 0.5% to 5% by weight of water.

9. Method according to any one of the above claims, **characterized in that** said aqueous phase obtained at the end of said step of filtration or decantation is recycled for the preparation of said stock solution.

10. Mobile plant for the valorization of gaseous effluents derived from alcohol fermentation comprising:
- a unit for the production of bicarbonate, said unit being divided into at least two compartments disposed successively in series, and said unit comprising an injection point for compressed gas at the lower part of the first compartment, a point for removal of an aqueous suspension in said first compartment, an injection point for aqueous solution in the last compartment, means of counter-flow circulation for gas and for liquid between each successive compartment;
- a means for injecting a compressed gaseous effluent connected to said injection point for gases of said first compartment and adapted to being connected detachably to a point of extraction of the gas effluents from an alcohol fermentation bioreactor, said means for injecting a compressed gas effluent comprising a compressor;
- a storage tank for an aqueous solution of alkaline carbonate;
- a means for injecting aqueous solution connected to said storage tank and said injection point for aqueous solution in the last compartment; and
- a means of removal and filtration connected to said point of removal of aqueous suspension from said first compartment.
